Europäisches Patentamt

European Patent Office

Office européen des brevets

(19)

(11) Numéro de publication : **0 451 075 A1**

## (12) DEMANDE DE BREVET EUROPEEN

(21) Numéro de dépôt : 91440027.0

(22) Date de dépôt : 04.04.91

(51) Int. Cl.⁵ : **C21D 1/42, C21D 11/00, C21D 9/00, H05B 6/06**

(30) Priorité : 04.04.90 FR 9004495

(43) Date de publication de la demande :
09.10.91 Bulletin 91/41

(84) Etats contractants désignés :
AT BE CH DE DK ES FR GB GR IT LI LU NL SE

(71) Demandeur : ATELIERS DE CONSTRUCTIONS
ELECTRIQUES DU SUNDGAU SARL
11, rue de lEglise
F-68210 Brechaumont (FR)

(72) Inventeur : Allemann, Christian
11 rue de l'Eglise
F-68210 Brechaumont (FR)

(74) Mandataire : Nithardt, Roland
CABINET NITHARDT & BURKARD 12 rue du 17
Novembre Boite Postale 1445
F-68071 Mulhouse Cédex (FR)

(54) **Dispositif pour chauffer des pièces métalliques par induction.**

(57) L'invention se rapporte à un four à induction (1) pourvu d'un passage longitudinal (3) pour des pièces métalliques (7) véhiculées par un moyen de convoyage (8). Pour éviter, en cas d'arrêt temporaire de l'avancement des pièces (7), de devoir arrêter le chauffage et vider le four avant de le remettre en fonction, il est prévu un ensemble d'inducteurs secondaires (20) disposés autour de l'inducteur principal, dans des positions ajustables. Lors d'un arrêt, l'inducteur principal (2) est arrêté et les pièces sont chauffées au moyen des inducteurs secondaires (20).

Le procédé appliqué consiste à maintenir les pièces (7) à des températures respectives définies par les positions qu'elles occupent le long du four. Chacune de ces températures est celle que les pièces ont en passant à l'emplacement correspondant pendant la marche normale du four. Le même procédé permet un démarrage du chauffage avec des pièces à l'arrêt dans le four.

FIG.1

EP 0 451 075 A1

La présente invention concerne un dispositif pour chauffer des pièces métalliques par induction comportant un four à induction pourvu d'inducteurs disposés autour d'un passage longitudinal, des moyens d'alimentation des inducteurs en courant alternatif, des moyens de convoyage agencés pour faire avancer des pièces le long dudit passage, et des moyens de commande agencés pour modifier l'alimentation d'au moins une partie des inducteurs en cas d'arrêt ou de variation de vitesse des moyens de convoyage.

On utilise souvent un four à induction pour chauffer des pièces métalliques sur une ligne de formage à chaud, en particulier une ligne de forgeage. Les pièces avancent à une vitesse régulière et la puissance des inducteurs est ajustée de façon à porter les pièces à la température voulue à la sortie du four. Cependant, des problèmes surgissent quand il y a des perturbations dans la cadence de production à la forge, car l'opérateur est obligé d'arrêter temporairement l'amenée des pièces, donc aussi le four à induction, si bien que les pièces qui s'y trouvent se refroidissent et, au redémarrage, ne pourront pas atteindre la température voulue. Il faut donc, avant de redémarrer, vider le four, évacuer ces pièces et les réintroduire sur la ligne en amont du four. Il en résulte des frais supplémentaires de manutention, des risques dus à la manipulation de pièces encore chaudes, un gaspillage d'énergie pour chauffer deux fois les mêmes pièces et, dans certains cas, une prolongation de la durée de l'arrêt si celui-ci était plus court que la durée nécessaire pour vider le four.

La publication DE-A-2 831 872 décrit un procédé où l'on réduit temporairement la puissance de l'inducteur d'un four à induction, pour éviter que la température des pièces à la sortie du four dépasse la valeur voulue, dans le cas où la vitesse d'avancement est réduite à cause de perturbations dans la fabrication. Toutefois, ce procédé n'est pas applicable en cas d'arrêt, car les pièces arrêtées atteindraient toutes à peu près la même température et, lors du redémarrage de la ligne, elles seraient chauffées différemment, selon leur parcours dans le four à partir de leur position d'arrêt, et elles atteindraient la sortie du four à des températures très différentes.

La présente invention a pour but de fournir un dispositif permettant d'éviter de tels inconvénients dans les cas où l'avancement des pièces doit s'arrêter, de manière à pouvoir maintenir les pièces sur la ligne et néanmoins les délivrer à la température voulue.

Dans ce but, le dispositif selon l'invention est caractérisé en ce que le four comporte un premier ensemble d'inducteurs, agencé pour porter les pièces à une température finale donnée en fonctionnement normal, et un second ensemble d'inducteurs commandé par lesdits moyens de commande pour fonctionner quand des pièces sont arrêtées dans le four, de manière à maintenir ces pièces à des niveaux de température déterminés correspondant à leurs positions respectives dans le four.

De préférence, les inducteurs du second ensemble sont disposés autour du premier ensemble d'inducteurs.

Dans une forme de réalisation particulière, certains des inducteurs du second ensemble sont montés de manière ajustable dans la direction longitudinale du passage des pièces. Ces inducteurs peuvent être connectés électriquement en parallèle ou en série. De préférence, l'intensité du champ produit par les inducteurs du second ensemble est croissante le long dudit passage, dans le sens d'avancement des pièces.

Dans une autre forme de réalisation, les moyens de commande du second ensemble d'inducteurs sont couplés à au moins un capteur de température des pièces se trouvant dans le four et sont agencés pour moduler la puissance d'inducteurs du second ensemble en fonction des indications dudit capteur de température. On peut ainsi agir sur les inducteurs du second ensemble sans qu'il soit nécessaire d'ajuster leurs positions. Les moyens de commande peuvent être agencés pour recevoir des signaux représentatifs de la vitesse des moyens de convoyage et pour commander une modulation de puissance du premier ensemble d'inducteurs en fonction de cette vitesse et des indications dudit capteur de température quand ladite vitesse s'écarte d'une vitesse prédéterminée.

Les moyens de commande peuvent aussi être agencés pour commander une phase de démarrage, dans laquelle une rangée de pièces est placée dans le four et est chauffée à l'arrêt jusqu'auxdits niveaux de température déterminés au moyen du second ensemble d'inducteurs, puis une phase normale de chauffage dans laquelle les pièces sont avancées par les moyens de convoyage et sont chauffés par le premier ensemble d'inducteurs.

Les moyens d'alimentation peuvent comporter une source principale d'énergie électrique, pour alimenter le premier ensemble d'inducteurs et une autre source d'énergie électrique pour alimenter le second ensemble d'inducteurs. Dans une autre forme d'exécution, les moyens d'alimentation peuvent comporter une source commune d'énergie électrique pour tous les inducteurs.

La présente invention et ses avantages apparaîtront mieux dans la description suivante d'un exemple de réalisation, en référence aux dessins annexés, dans lesquels :

la figure 1 est une vue schématique en coupe horizontale d'un four à induction selon l'invention,

la figure 2 est un diagramme représentant la température des pièces en fonction de leur position le long de leur passage dans le four de la figure 1, et

la figure 3 est un diagramme représentant l'intensité du champ magnétique le long du passage des pièces dans le four.

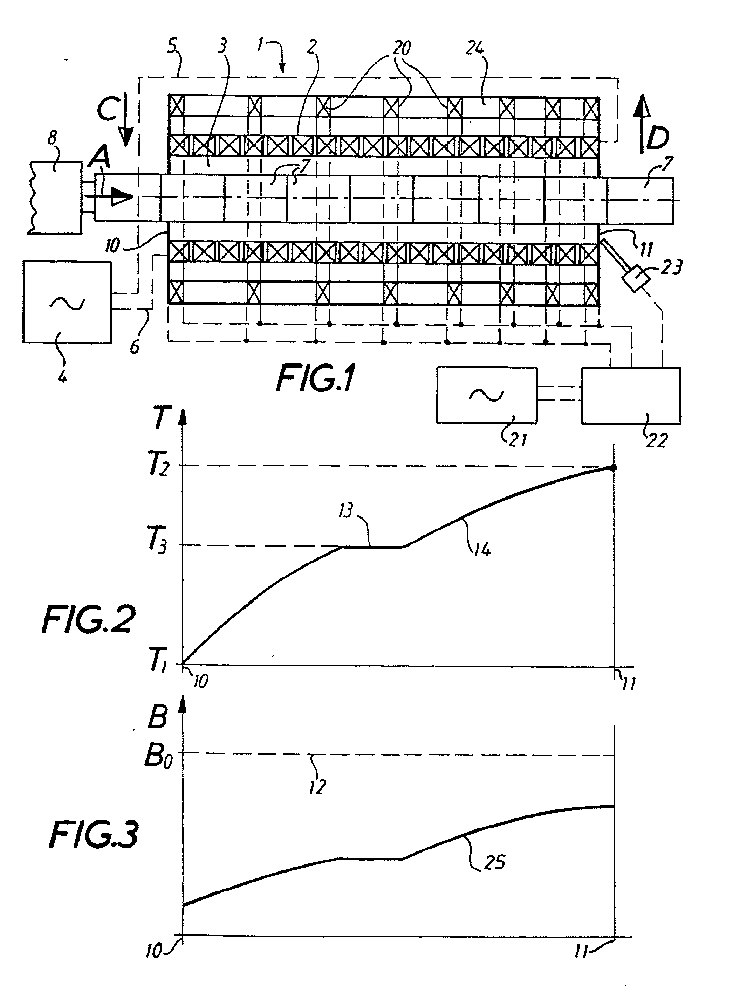

Le four à induction 1 représenté à la figure 1 comporte, de manière classique, un inducteur principal 2 formé par une bobine cylindrique entourant un passage longitudinal 3 pour des pièces à chauffer. Cet inducteur est alimenté en courant alternatif à forte intensité par un générateur principal 4 relié aux deux extrémités de la bobine par des connexions électriques 5 et 6. La bobine 2 est refroidie de manière connue par un circuit d'eau qui n'est pas représenté. Le passage 3 contient des rails de guidage sur lesquels des pièces à chauffer telles que des lopins d'acier 7 sont avancées à un cadence régulière par un dispositif de poussage 8, dans le sens de la flèche A. Les lopins 7 sont amenés à l'entrée 10 du four 1 suivant la flèche C, puis dans le couloir 3 où ils sont chauffés par induction et, à la sortie 11 du four, ils sont évacués suivant la flèche D pour être forgés immédiatement.

Dans ce mode de fonctionnement classique du four, l'induction magnétique B du champ créé par l'inducteur principal 2 a une valeur Bo sensiblement constante le long du passage 3, comme on l'a représenté par une ligne horizontale 12 à la figure 3. La courbe 14 de la figure 2 montre schématiquement la variation de la température T des lopins 7 le long du passage 3, pour passer de la température ambiante T1, à l'entrée 10 du four, à une température voulue T2 à la sortie 11, par exemple environ 1250°C pour le forgeage. La figure 2 montre également que la montée en température des lopins 7 marque au moins un palier 13, en particulier à une température T3 correspondant au point de Curie.

Dans ce mode de fonctionnement classique, la puissance de chauffe de l'inducteur principal 2 est constante. Cette puissance et/ou la vitesse de l'avancement (continu ou saccadé) des lopins 7 dans le sens A sont ajustées de façon que les lopins atteignent la température T2 à la sortie du four. Si l'avancement doit être arrêté pour une raison quelconque, l'inducteur principal 2 ne peut pas être maintenu en fonction, même à une puissance réduite, car la température des pièces deviendrait uniforme sur toute la longueur du four. Quand l'avancement pourra recommencer et que l'inducteur 2 sera remis à sa pleine puissance, la plupart des pièces maintenues chaudes sortiront du four à une température différente de la température T2 voulue.

C'est pourquoi le four 1 est complété par un dispositif auxiliaire de chauffage, comportant plusieurs inducteurs auxiliaires 20 constitués par des bobines en forme de galettes entourant l'inducteur principal 2 et raccordés en parallèle (ou en série dans certains cas) à un générateur électrique auxiliaire 21 couplé à un organe de commande 22 agencé pour moduler la puissance d'alimentation des inducteurs secondaires. Cet organe peut être raccordé à un ou plusieurs capteurs de température tels qu'un pyromètre 23, lui délivrant un signal représentatif de la température des lopins 7 à un ou plusieurs points de leur passage dans le couloir 3. Dans une variante de réalisation, on peut remplacer le générateur auxiliaire 21 par un raccordement au générateur principal 4, par l'entremise d'un organe de commutation permettant de basculer l'alimentation entre les deux ensembles d'inducteurs. Les inducteurs secondaires 20 sont montés de manière mobile le long d'un bâti auxiliaire 24, de sorte que l'on peut ajuster leurs positions longitudinales respectives en fonction de la nature des pièces à chauffer et de la variation voulue de l'intensité du champ magnétique le long du passage 3. Le chauffage par les inducteurs secondaires 20 a pour but de maintenir les lopins 7 à des températures respectives correspondant à leurs positions le long du passage 3, ces températures étant celles de la courbe 14 de la figure 2. Il s'agit donc uniquement de compenser les pertes thermiques des pièces, et par conséquent, la puissance demandée est beaucoup plus faible que celle de l'inducteur principal 2. En outre, cette puissance a une répartition non uniforme le long du four, comme le montre la courbe 25 représentant schématiquement l'induction magnétique B nécessaire pour maintenir les lopins 7 aux températures représentées par la figure 2. La possibilité d'ajustage longitudinal de la position des bobines permet en particulier d'ajuster la forme de la courbe 25 à la courbe de température d'un type particulier de pièce. L'organe de réglage 22 peut alors moduler la puissance sur la base d'un programme pré-établi, sur les indications d'un seul capteur de température 23.

La présente invention n'est pas limitée à l'exemple de réalisation décrit ci-dessus et elle peut faire l'objet de nombreuses variantes, pour autant que le four comporte au moins un premier inducteur, qui est alimenté durant des phases d'avancement des pièces, et au moins un second inducteur alimenté durant des phases de maintien de la température des pièces arrêtées. A la place d'un ajustage mécanique par modification de la position des bobines 20, on peut prévoir un ajustage électrique si l'on utilise comme inducteurs secondaires des bobines fixes dont la puissance sera modulée, en fonction de la courbe de température à atteindre (figure 2), à l'aide de plusieurs capteurs de température répartis le long du four. En outre, l'organe de réglage 22 peut être agencé pour commander une modulation de la puissance de l'inducteur principal 2 dans les cas où les pièces avancent à une vitesse réduite. Cette modulation peut se faire à partir d'une vitesse d'avancement sélectionnée ou mesurée dans le dispositif de poussage 8, et/ou à partir des températures des pièces mesurées dans le four.

## Revendications

1. Dispositif pour chauffer des pièces métalliques par induction comportant un four à induction (1) pourvu d'inducteurs (2, 20) disposés autour d'un passage longitudinal (3), des moyens (4, 21) d'alimentation des inducteurs en courant alternatif, des moyens de convoyage (8) agencés pour faire avancer des pièces (7) le long dudit passage, et des moyens de commande (22) agencés pour modifier l'alimentation d'au moins une partie des inducteurs (2, 20) en cas d'arrêt ou de variation de vitesse des moyens de convoyage (8), caractérisé en ce que le four comporte un premier ensemble d'inducteurs (2), agencé pour porter les pièces à une température finale donnée en fonctionnement normal, et un second ensemble d'inducteurs (20) commandé par lesdits moyens de commande (22) pour fonctionner quand des pièces sont arrêtées dans le four, de manière à maintenir ces pièces à des niveaux de température déterminés, correspondant à leurs positions respectives dans le four.

2. Dispositif selon la revendication 1, caractérisé en ce que les inducteurs (20) du second ensemble sont disposés autour du premier ensemble d'inducteurs (2).

3. Dispositif selon la revendication 2, caractérisé en ce qu'au moins certains des inducteurs (20) du second ensemble sont montés de manière ajustable dans la direction longitudinale du passage des pièces.

4. Dispositif selon la revendication 2 ou 3, caractérisé en ce que l'intensité du champ produit par les inducteurs (20) du second ensemble est croissante le long dudit passage (3), dans le sens d'avancement des pièces.

5. Dispositif selon la revendication 1, caractérisé en ce que les moyens de commande (22) sont couplés à au moins un capteur (23) de température des pièces se trouvant dans le four et sont agencés pour moduler la puissance des inducteurs (20) du second ensemble en fonction des indications dudit capteur de température (23).

6. Dispositif selon la revendication 5, caractérisé en ce que les moyens de commande (22) sont agencés pour recevoir des signaux représentatifs de la vitesse des moyens de convoyage (8) et pour commander une modulation de puissance du premier ensemble d'inducteurs (2) en fonction de cette vitesse et des indications dudit capteur de température (23) quand ladite vitesse s'écarte d'une vitesse prédéterminée.

7. Dispositif selon la revendication 5, caractérisé en ce que les moyens de commande (22) sont agencés pour commander une phase de démarrage, dans laquelle une rangée de pièces (7) est placée dans le four (1) et est chauffée à l'arrêt jusqu'auxdits niveaux de température déterminés au moyen du second ensemble d'inducteurs (20), puis une phase normale de chauffage dans laquelle les pièces (7) sont avancées par les moyens de convoyage (8) et sont chauffés par le premier ensemble d'inducteurs (2).

8. Dispositif selon la revendication 1, caractérisé en ce que les moyens d'alimentation comportent une source principale d'énergie électrique (4), pour alimenter le premier ensemble d'inducteurs (2), et une autre source d'énergie électrique (21) pour alimenter le second ensemble d'inducteurs (20).

9. Dispositif selon la revendication 1, caractérisé en ce que les moyens d'alimentation comportent une source commune d'énergie électrique pour tous les inducteurs (2, 20).

FIG.1

FIG.2

FIG.3

EP 0 451 075 A1

Office européen
des brevets

**RAPPORT DE RECHERCHE EUROPEENNE**

Numero de la demande

EP  91 44 0027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 070 232 (CEM) <br> * Revendications 1,3-10 * <br> --- | 1,5 | C 21 D    1/42 <br> C 21 D   11/00 <br> C 21 D    9/00 <br> H 05 B    6/06 |
| A | PATENT ABSTRACTS OF JAPAN, vol. 9, no. 293 (C-315), 20 novembre 1985; & JP-A-60 135 528 (KAWASAKI SEITETSU) 18-07-1985 <br> * Résumé * <br> --- | 6 | |
| A,D | DE-A-2 831 872 (BBC) <br> * Revendications 1-3 * <br> --- | 7 | |
| A | EP-A-0 295 072 (THE ELECTRICITY COUNCIL) <br> ----- | | |

| | DOMAINES TECHNIQUES RECHERCHES (Int. Cl.5) |
|---|---|
| | C 21 D <br> H 05 B |

Le présent rapport a été établi pour toutes les revendications

| Lieu de la recherche | Date d'achèvement de la recherche | Examinateur |
|---|---|---|
| LA HAYE | 13-06-1991 | WITTBLAD U.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                
& : membre de la même famille, document correspondant

EPO FORM 1503 03.82 (P0402)

6